# EUROPEAN PATENT SPECIFICATION

(11) **EP 4 447 280 B1**
(45) Date of publication and mention of the grant of the patent: **01.04.2026**
(21) Application number: 23791876.8
(22) Date of filing: 19.04.2023
(51) Int. Cl.: H02K 3/12, H02K 3/28

(54) **STATOR**
STATOR
STATOR

(30) Priority: 21.04.2022 JP 2022070350
(43) Date of publication of application: 16.10.2024
(73) Proprietor: AISIN CORPORATION, Kariya-shi, Aichi 448-8650 (JP)
(72) Inventor: HASHIMOTO, Shingo, Kariya-shi, Aichi 448-8650 (JP); SUGAWARA, Junichi, Kariya-shi, Aichi 448-8650 (JP); MISHINA, Tokuhisa, Kariya-shi, Aichi 448-8650 (JP)
(74) Representative: Kramer Barske Schmidtchen Patentanwälte PartG mbB
(86) International application number: PCT/JP2023/015542
(87) International publication number: WO 2023/204228

(56) References cited:
- WO-A1-2021/250790
- JP-B1- 6 996 028
- JP-B1- 6 996 028
- US-A1- 2019 207 454
- US-A1- 2022 294 298

## Description

### TECHNICAL FIELD

The present invention relates to a stator of a rotating electrical machine including a cylindrical stator core having a plurality of slots arranged side by side in a circumferential direction, and three-phase coils wound around the stator core and through which alternating currents of phases different from each other flow.

### BACKGROUND ART

JP 2018-88729 A discloses a stator (10) including three-phase coils (stator windings (20)) formed using a segment conductor (30) made of a rectangular wire with a rectangular cross-section (The reference signs in parentheses in the background art are those of the literature.). The segment conductor (30) is formed in a substantially U-shape, and has two housed portions (in-slot conductive wire portions (34, 35)) housed in groove-like slots (18) formed along the axial direction of a stator core (12), the housed portions being portions corresponding to the sides of the U-shape, and a connecting portion (coil end portion (36)) that is a portion corresponding to the bottom of the U-shape and connects the two housed portions. The segment conductor (30) is disposed in the stator core in a state where the connecting portion projects from the stator core (12) on one side in the axial direction of the stator core (12). On the other side in the axial direction of the stator core, a lead portion (32, 33) that is a portion corresponding to an end of the side of the U-shape and extends from the housed portion projects from the stator core (12). The lead portion (32, 33) is joined to the lead portion (32, 33) of another segment conductor (30) by welding or the like, so that the coil (stator winding (20)) is formed.

The segment conductor (30) is wound around the stator core (12) in a manner that the coil (stator winding (20)) is wound around the stator core (12) a plurality of turns. That is, the plurality of segment conductors (30) are radially arranged in one slot (18). The individual segment conductors (30) are arranged in the slots (18) at intervals in a manner that the plurality of slots (18) are sandwiched between one and the other of the two housed portions (in-slot conductive wire portions (34, 35)). At this time, one housed portion and the other housed portion may be at different arrangement positions in the radial direction. Assuming that the line virtually connecting the same positions in the radial direction in the circumferential direction is defined as a lane, the segment conductors are arranged in the stator core (12) while performing lane change in which the lane in which each of the two housed portions is disposed is changed at the connecting portion. In the segment conductors (30) arranged adjacent to each other in the circumferential direction, one segment conductor (30) passes over the other segment conductor (30) at the connecting portion (the other connecting portion passes under the one connecting portion).

### CITATION LIST

### PATENT LITERATURE

Patent Literature 1: JP 2018-88729 A

Further relevant prior art is disclosed in US 2019/207454 A1 and JP 6996028 B1.

### SUMMARY OF INVENTION

### TECHNICAL PROBLEMS

The connecting portion is formed in a mountain shape in which the central portion bulges in a direction away from the stator core (12). In a case where the stator core (12) is downsized in order to downsize the rotating electrical machine, it is also necessary to reduce a bending radius when the segment conductor (30) is bent at the connecting portion to form a mountain shape. However, as described above, in a case where the segment conductor (30) is made of a rectangular wire, there is a limit to reducing the bending radius. When the stator core (12) is downsized, the circumferential interval of the slots (18) is also reduced. Therefore, when one segment conductor (30) passes over or passes under the other segment conductor (30) at the connecting portion, the segment conductors (30) may interfere with each other. By forming the segment conductor (30) in a manner that the height from the axial end face of the stator core (12) to the vertex of the connecting portion is increased, such interference can be suppressed. However, in this case, the axial length of the coil end portion projecting from the axial direction of the stator core (12) is increased, and thus downsizing of the stator is hindered.

In view of the above background, it is desirable to obtain a stator capable of downsizing a coil end portion while avoiding interference between segment conductors.

### SOLUTIONS TO PROBLEMS

In view of the above, a stator of a rotating electrical machine including a stator core with a cylindrical shape, having a plurality of slots arranged side by side in a circumferential direction, and three-phase coils wound around the stator core and through which alternating currents of phases different from each other flow, phases of the alternating currents are assumed to be a first phase, a second phase, and a third phase in advancing order of the phases, the coil through which the alternating current of the first phase flows is assumed to be a first-phase coil, the coil through which the alternating current of the second phase flows is assumed to be a second-phase coil, and the coil through which the alternating current of the third phase flows is assumed to be a third-phase coil, a direction along an axial center of the stator core is assumed to be an axial direction, a direction orthogonal to the axial center is assumed to be a radial direction, one side in the axial direction is assumed to be an axial first side, another side in the axial direction is assumed to be an axial second side, one side in the circumferential direction is assumed to be a circumferential first side, and another side in the circumferential direction is assumed to be a circumferential second side, the first-phase coil includes a first housed portion housed in a first slot as a first slot of the slots, a second housed portion housed in a second slot that is the slot adjacent to the first slot on the circumferential second side, a third housed portion housed in a third slot that is the slot disposed to be spaced apart from the second slot on the circumferential second side with a plurality of the slots interposed between the third slot and the second slot, a fourth housed portion housed in a fourth slot that is the slot adjacent to the third slot on the circumferential second side, a first connecting portion connecting the first housed portion and the fourth housed portion on the axial first side of the stator core, and a second connecting portion connecting the second housed portion and the third housed portion on the axial first side of the stator core, the second connecting portion is located closer to the axial second side than the first connecting portion and is disposed so as to overlap the first connecting portion in axial view along the axial direction, a portion of the second-phase coil projecting from the stator core to the axial first side is assumed to be a second-phase coil connecting portion, and a portion of the third-phase coil projecting from the stator core to the axial first side is assumed to be a third-phase coil connecting portion, the first connecting portion includes a first circumferential region that is a region on the circumferential first side, a second circumferential region that is a region on the circumferential second side of the first circumferential region, and a connecting region that is a region connecting the first circumferential region and the second circumferential region and includes a radially bent portion formed to be bent in the radial direction, the first circumferential region includes a first section that is on the axial second side of the third-phase coil connecting portion and overlaps the third-phase coil connecting portion in the axial view, and a second section that is on the axial first side of the second-phase coil connecting portion and overlaps the second-phase coil connecting portion in the axial view, the second circumferential region includes a third section that is on the axial first side of the third-phase coil connecting portion and overlaps the third-phase coil connecting portion in the axial view, and a fourth section that is on the axial second side of the second-phase coil connecting portion and overlaps the second-phase coil connecting portion in the axial view, the first circumferential region is inclined as a whole to the axial first side toward the circumferential second side, and the second circumferential region is inclined as a whole to the axial second side toward the circumferential second side, and an angle formed by an extending direction of the first connecting portion with respect to the circumferential direction is assumed to be an extension angle, a first bent portion in which the extension angle changes is formed between the first section and the second section, and the extension angle in the second section is larger than the extension angle in the first section, and a second bent portion in which the extension angle changes is formed between the third section and the fourth section, and the extension angle in the third section is larger than the extension angle in the fourth section.

According to this configuration, since the second connecting portion is disposed at the position that is closer to the axial second side than the first connecting portion and overlaps the first connecting portion in axial view, the first connecting portion and the second connecting portion are not aligned in the radial direction, and the radial dimension of the coil end portion can be easily reduced. According to this configuration, since the inclination angle of the second section is larger than the inclination angle of the first section, the first connecting portion and the second connecting portion can be arranged in a limited space in the circumferential direction while the interference between the first section and the third-phase coil connecting portion disposed on the axial first side of the first section, the interference between the second section and the second-phase coil connecting portion disposed on the axial second side of the second section, the interference between the third section and the third-phase coil connecting portion disposed on the axial second side of the third section, and the interference between the fourth section and the second-phase coil connecting portion disposed on the axial first side of the fourth section are avoided. Furthermore, by reducing the inclinations of the first section and the fourth section, the length in the axial direction toward the axial first side can be easily kept shorter toward the circumferential second side in the first section, and the length in the axial direction toward the axial first side can be easily kept shorter toward the circumferential first side in the fourth section. That is, as a whole, the length of the connecting portion toward the axial first side, in other words, the height of the coil in the axial direction can be kept low. Therefore, the axial dimension of the coil end portion can be easily reduced. As described above, according to this configuration, it is possible to obtain the stator capable of downsizing the coil end portion while avoiding the interference between the segment conductors.

Further features and advantages of the stator of the rotating electrical machine will become apparent from the following description of exemplary and non-limiting embodiments, which will be described with reference to the drawings.

### BRIEF DESCRIPTION OF DRAWINGS

FIG. 1 is a perspective diagram illustrating an appearance of a stator.
FIG. 2 is a schematic circuit block diagram illustrating an example of electrical connection to a coil.
FIG. 3 is a diagram schematically illustrating a basic configuration of a segment conductor.
FIG. 4 is a plan view of the stator as viewed from an axial first side.
FIG. 5 is an enlarged perspective diagram of the stator as viewed from a radially inner side in a state where the segment conductor on the innermost circumferential side is removed.
FIG. 6 is a circumferential plane enlarged developed view illustrating an arrangement example of the segment conductors as viewed from the radially inner side.
FIG. 7 is an explanatory diagram illustrating an extension angle of the segment conductor.
FIG. 8 is an enlarged plan view illustrating an arrangement example of the segment conductors as viewed from the axial first side.
FIG. 9 is a partial perspective diagram illustrating an arrangement example of segment conductors of a comparative example.
FIG. 10 is a partial plan view illustrating the arrangement example of the segment conductors of the comparative example as viewed from the axial first side.

### DESCRIPTION OF EMBODIMENTS

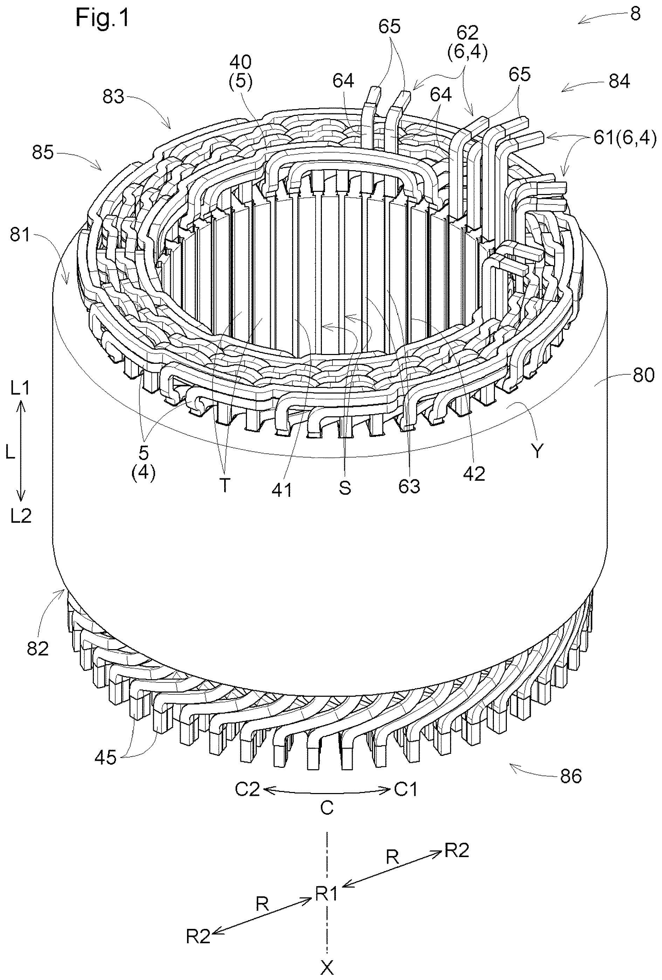

Hereinafter, embodiments of a stator of a rotating electrical machine will be described with reference to the drawings. The perspective diagram of FIG. 1 illustrates a stator 8 in which a coil 84 (stator coil) is wound around a stator core 80. In the following description, "axial direction L", "radial direction R", and "circumferential direction C" are defined with reference to the axial center X of the stator core 80 around which the coil 84 is wound. As illustrated in FIG. 1, one side in the axial direction L is defined as an axial first side L1, and the other side in the axial direction L (side opposite to the axial first side L1) is defined as an axial second side L2. In addition, one side in the circumferential direction C is defined as a circumferential first side C1, and the other side in the circumferential direction C (side opposite to the circumferential first side C1) is defined as a circumferential second side C2. In the following description, each of the directions of the coil 84 and a segment conductor 4 forming the coil 84 is a direction in a state where the coil 84 is wound around the stator core 80.

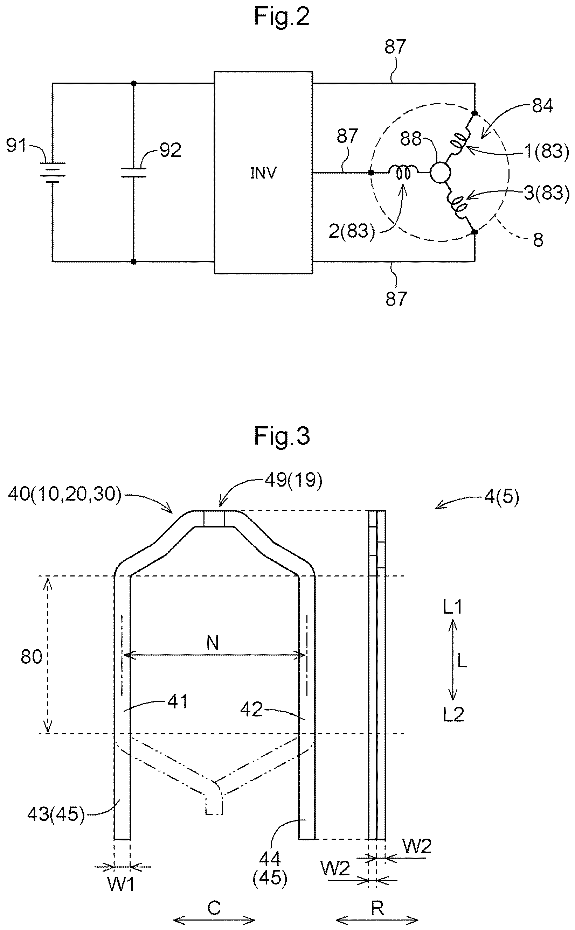

As illustrated in FIG. 2, an inverter INV is provided as an AC power supply that supplies AC power to the rotating electrical machine (stator 8). The inverter INV is connected between a DC power supply 91 and the coil 84, and converts power between DC power and multi-phase (here, three-phase) AC power. The inverter INV includes a plurality of switching elements. The rotating electrical machine can function as both an electric motor and a generator, and when functioning as a generator, the generated AC power is converted into DC power by the inverter INV and supplied to the DC power supply 91. The DC power supply 91 includes, for example, a secondary battery (battery) such as a nickel hydrogen battery or a lithium ion battery, an electric double layer capacitor, or the like. In a case where the rotating electrical machine is a driving power source of a vehicle, the DC power supply 91 is a high-voltage, high-capacity power supply, and the rated power supply voltage is, for example, 200 to 400 [V]. A DC link capacitor 92 (smoothing capacitor) that smooths a voltage (DC link voltage) on the DC side of the inverter INV is provided on the DC side of the inverter INV. The DC link capacitor 92 stabilizes a DC voltage (DC link voltage) that fluctuates depending on the fluctuation of the power consumption of the rotating electrical machine.

As illustrated in FIG. 2, in the present embodiment, the coil 84 is a Y-connected coil in which three phases (U-phase, V-phase, W-phase) are connected at a neutral point. Although details will be described later, the three-phase coils (here, a first-phase coil 1, a second-phase coil 2, and a third-phase coil 3) are electrically connected to each other by a neutral point bus bar 88. The three-phase coils are electrically connected to the three-phase AC outputs of the inverter INV by power line bus bars 87. The first-phase coil 1 may be any of the U-phase, the V-phase, and the W-phase, and the second-phase coil 2 and the third-phase coil 3 similarly correspond to any of the U-phase, the V-phase, and the W-phase depending on the first-phase coil 1.

As illustrated in FIG. 1, the coil 84 is wound around the stator core 80 in which a plurality of slots S and a plurality of teeth T extending in the axial direction L are formed in the circumferential direction C. The stator core 80 includes a yoke Y formed in an annular shape as viewed in the axial direction L, and the plurality of teeth T extending from the yoke Y to a radially inner side R1 (side on which a rotor (not illustrated) is disposed in the present embodiment). A groove-like slot S having a bottom on a radially outer side R2 is formed between two teeth T adjacent in the circumferential direction C. In the present embodiment, the slot S is a semi-open slot, and the opening on the radially inner side R1 of the slot S is formed to have a smaller width in the circumferential direction C than the region of the slot S where the coil 84 is disposed. Here, the width of the opening of the slot S in the circumferential direction C is formed to be smaller than a long side length W1 to be described later. The stator core 80 is made of a magnetic material. For example, the stator core 80 is formed by stacking a plurality of magnetic plates (for example, electromagnetic steel sheets such as silicon steel sheets). Alternatively, the stator core 80 is made of, as a main component, a green compact formed by pressure-molding magnetic material powder.

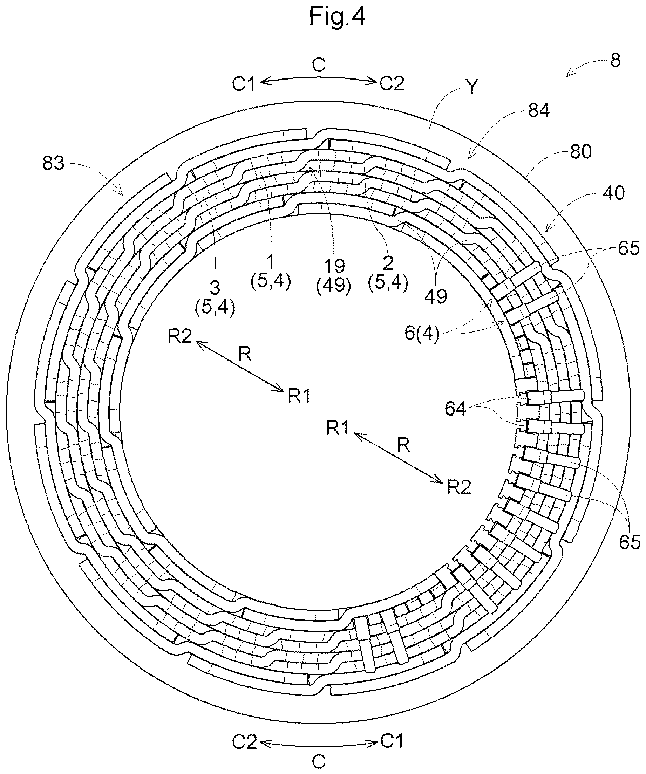

The coil 84 includes a plurality of housed portions (a first end-side housed portion 41, a second end-side housed portion 42, and a specific housed portion 63 to be described later) arranged in the slots S. In the present embodiment, the housed portion is disposed in the slot S so as to extend parallel to the axial direction L. In the coil 84, as illustrated in FIGS. 1, 4, and the like, the plurality of housed portions are arranged inside one slot S in a layered manner with the arrangement region of one housed portion in the radial direction R as one layer. In the present embodiment, the coil 84 has a six-layer winding structure, and a plurality of housed portions stacked in six layers are arranged in a line along the radial direction R inside one slot S. Therefore, in the present embodiment, a maximum of six housed portions are arranged side by side in the radial direction R inside one slot S.

The coil 84 is formed by joining the plurality of segment conductors 4 illustrated in FIG. 3. Each of the segment conductors 4 has lead portions (a first lead portion 43 and a second lead portion 44) at both ends in the extending direction of the segment conductor 4. The coil 84 is formed by sequentially joining the lead portions of the plurality of segment conductors 4.

Each of the segment conductors 4 is formed using one continuous linear conductor. Here, "continuous" means that the conductor is integrally formed in the extending direction without any seam. The linear conductor is made of a conductive material such as copper or aluminum. The surface of the linear conductor is coated with an insulating film made of an electrically insulating material such as a resin (for example, an enamel resin made of polyamideimide or the like) except for electrical connection portions between different members.

As illustrated in FIG. 3, in the present embodiment, a linear conductor (rectangular wire) with a rectangular (rectangular in the present embodiment) cross-section orthogonal to the extending direction is used as the linear conductor forming the segment conductor 4. In the present embodiment, the cross-sectional shape of the segment conductor 4 is a rectangular shape having the long side length W1 and a short side length W2. The shape of the cross-section is not prevented from being a square shape, and a rectangular shape in which corner portions are chamfered in an arc shape (R-chamfered) or linearly chamfered (C-chamfered), and a shape in which the absolute value of the difference between an internal angle and 90 degrees is less than a predetermined angle (for example, 5 degrees, 10 degrees, or the like) are included.

The segment conductor 4 includes a general segment conductor 5 that is continuously joined as described above to form a plurality of coil bodies 83 as the core of the coil 84, and a specific segment conductor 6 joined to each end of the coil body 83. In the present embodiment, the specific segment conductor 6 is the segment conductor 4 that connects the power line bus bars 87 that supply AC power from the inverter INV to the coil bodies 83, and connects the neutral point bus bar 88 that forms the neutral point of the coil 84 to the neutral point of each of the plurality of coil bodies 83.

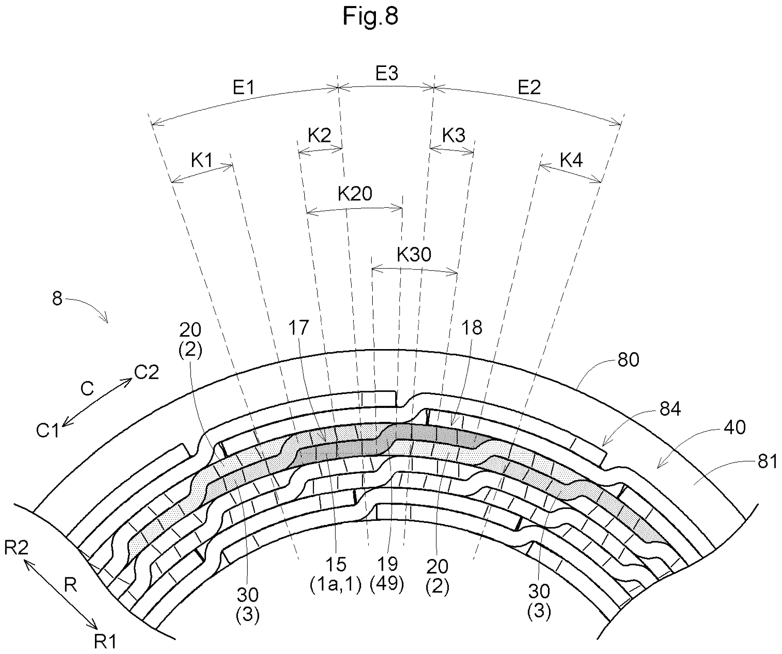

FIG. 3 schematically illustrates the general segment conductor 5 as a representative of the segment conductor 4. The general segment conductor 5 has a substantially U-shape. As illustrated in FIG. 3, the long side surface side of the rectangular wire with a rectangular cross-section is the front side of the substantially U-shape, and the short side surface side of the rectangular wire is the side surface. The general segment conductor 5 is formed in a U-shape by edgewise bending in which the short side is bent except for a bent portion 49 (radially bent portion 19 and the like (see FIGS. 4 to 8 and the like)) in the radial direction R to be described later.

Each of the segment conductors 4 has the first lead portion 43 and the second lead portion 44 at both ends in the extending direction of the segment conductor 4. In the substantially U-shape, the first lead portion 43 and the first end-side housed portion 41 are continuously and linearly formed in a portion extending linearly on the first lead portion 43 side, and the second lead portion 44 and the second end-side housed portion 42 are continuously and linearly formed in a portion extending linearly on the second lead portion 44 side. A connecting portion 40 is formed at the bottom of the substantially U-shape so as to connect the first end-side housed portion 41 and the second end-side housed portion 42. The bent portion 49 described above is formed at the central portion of the connecting portion 40. The bent portion 49 is formed by flatwise bending in which the long side is bent.

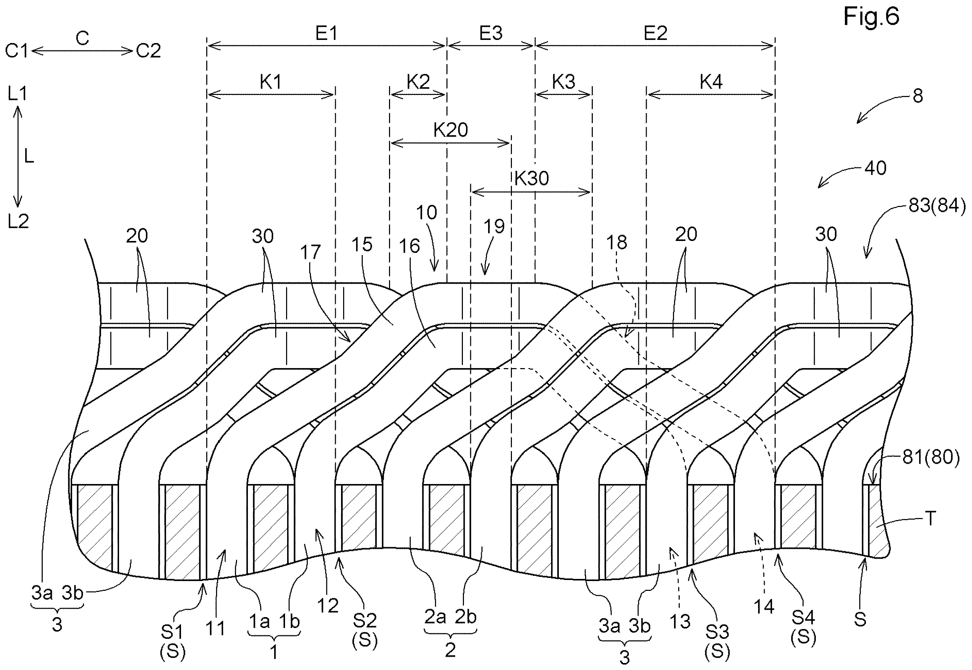

The first end-side housed portion 41 and the second end-side housed portion 42 are portions housed in the slot S of the stator core 80. The interval between the first end-side housed portion 41 and the second end-side housed portion 42 in the circumferential direction C is N times (N is a natural number) the interval between the slots S adjacent in the circumferential direction C. In the present embodiment, N = 6 or N = 4 (see FIG. 6 and the like). As described above, in the segment conductor 4, the plurality of housed portions are arranged inside one slot S in six layers with the arrangement region of one housed portion (first end-side housed portion 41, second end-side housed portion 42, or the like) in the radial direction R as one layer. That is, a plurality of housed portions are arranged in a line along the radial direction R inside one slot S. Therefore, the interval in the circumferential direction C is different between the radially inner side R1 and the radially outer side R2. As a result, the interval in the circumferential direction C between the first end-side housed portion 41 and the second end-side housed portion 42 of the segment conductor 4 disposed on the radially outer side R2 is wider than the interval in the circumferential direction C between the first end-side housed portion 41 and the second end-side housed portion 42 of the segment conductor 4 disposed on the radially inner side R1.

The segment conductor 4 is inserted into the slot S along the axial direction L from the axial first side L1 toward the axial second side L2 into the stator core 80, from the first lead portion 43 and the second lead portion 44 side. The connecting portion 40 is a portion projecting to the axial first side L1 of the stator core 80 in a state where the first end-side housed portion 41 and the second end-side housed portion 42 of the segment conductor 4 are housed in the slot S. The first lead portion 43 and the second lead portion 44 are portions projecting to the axial second side L2 of the stator core 80 in a state where the first end-side housed portion 41 and the second end-side housed portion 42 of the segment conductor 4 are housed in the slot S. The projecting first lead portion 43 and second lead portion 44 are bent in the circumferential direction C as indicated by two-dot chain lines in FIG. 3, and are joined to the lead portions of the other segment conductors 4 by welding or the like. The first lead portion 43 and the second lead portion 44 correspond to a joint portion 45 in contrast to the connecting portion 40.

In this manner, a portion where the coil 84 projects, that is, a so-called coil end portion is formed on the axial first side L1 and the axial second side L2 of the stator core 80. When these coil end portions are distinguished from each other, the coil end portion formed by the connecting portion 40 on the axial first side L1 is referred to as "first coil end portion 85", and the coil end portion formed by the joint portion 45 on the axial second side L2 is referred to as "second coil end portion 86". The length from an axial first side end face 81 of the stator core 80 to the portion of the connecting portion 40 projecting most to the axial first side L1 corresponds to the length of the first coil end portion 85 in the axial direction L. The length from an axial second side end face 82 of the stator core 80 to the portion of the joint portion 45 projecting most to the axial second side L2 corresponds to the length of the second coil end portion 86 in the axial direction L.

In addition to the general segment conductor 5 forming the coil body 83, the coil 84 also includes the power line bus bar 87 that connects the coil body 83 and a power supply (in this case, the inverter INV that supplies AC power), and the specific segment conductor 6 electrically connected to the neutral point bus bar 88 connecting different phases in the coil body 83. As illustrated in FIG. 1, the specific segment conductor 6 includes the specific housed portion 63 housed in the slot S of the stator core 80, an axially extending portion 64 extending in the axial direction with respect to the stator core 80, and a radially extending portion 65 extending in the radial direction R to be closer to the axial first side L1 than the connecting portion 40 of the general segment conductor 5 and to be closer to the radially outer side R2 than the axially extending portion 64.

The plurality of specific segment conductors 6 include a plurality of power line conductors 61 connected to an AC power supply (here, the inverter INV) and a plurality of neutral point conductors 62 for connecting neutral points of the plurality of coil bodies 83. The radially extending portions 65 of the plurality of power line conductors 61 are arranged to be closer to the axial first side L1 than the radially extending portions 65 of the plurality of neutral point conductors 62.

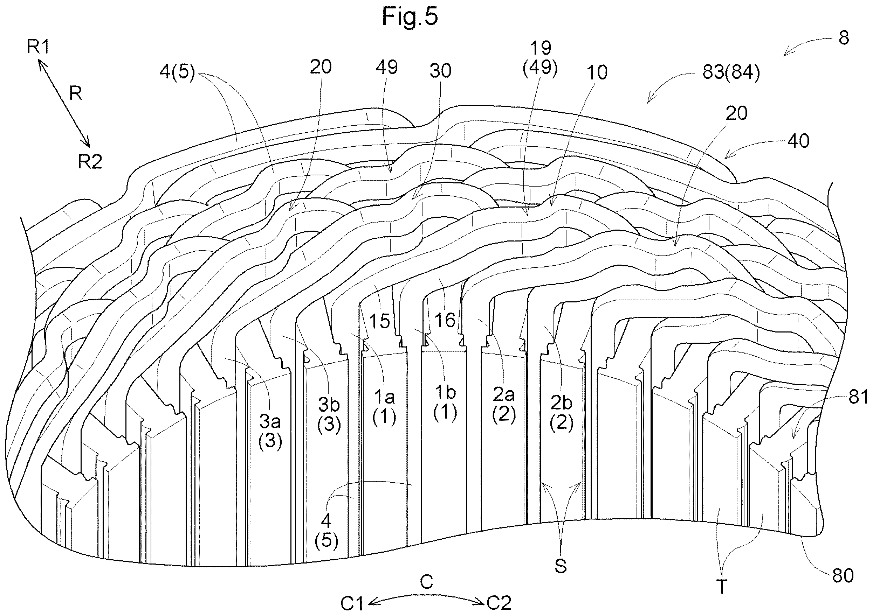

As described above, the individual segment conductors 4 (general segment conductors 5) are arranged in the slots S at intervals in a manner that the plurality of slots S are sandwiched between the two housed portions (the first end-side housed portion 41 and the second end-side housed portion 42). At this time, the first end-side housed portion 41 and the second end-side housed portion 42 may be at different arrangement positions in the radial direction R. That is, the first end-side housed portion 41 and the second end-side housed portion 42 may be arranged in different layers (see FIG. 4). Assuming that the layer formed by virtually connecting the same positions in the radial direction R in the circumferential direction C is defined as a lane in which the coil 84 extends in the circumferential direction C, the segment conductors 4 are arranged in the stator core 80 while performing lane change in which the lane in which each of the two housed portions is disposed is changed at the connecting portion 40 (see FIGS. 4 and 5). For this reason, in the segment conductors 4 arranged adjacent to each other in the circumferential direction C, as illustrated in FIG. 5 and the like, one segment conductor 4 passes over or passes under the other segment conductor 4 at the connecting portion 40.

The connecting portion 40 is formed in a mountain shape in which the central portion bulges in a direction away from the stator core 80. In a case where the rotating electrical machine is downsized, the stator core 80 also needs to be downsized, and it may be necessary to reduce a bending radius when the segment conductor 4 is bent at the connecting portion 40 to form a mountain shape. However, as described above, in a case where the segment conductor 4 is made of a rectangular wire and a U-shape is formed by edgewise bending, there is a limit to reducing the bending radius due to, for example, a problem of strength caused by the relationship with the bending stress of the conductor and a problem of ensuring insulation property in consideration of the influence on an insulating film.

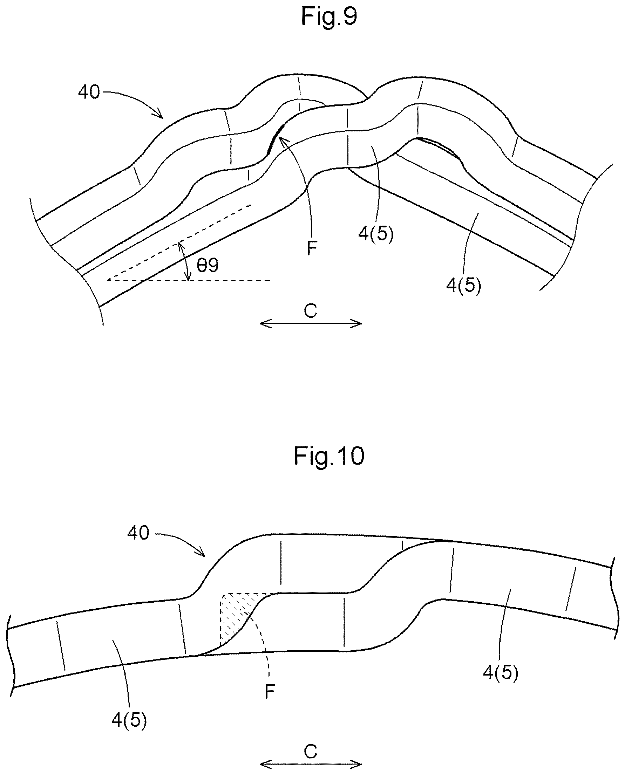

When the stator core 80 is downsized, the interval between the slots S in the circumferential direction C is also reduced. Therefore, when one segment conductor 4 passes over or passes under the other segment conductor 4 at the connecting portion 40, the segment conductors 4 may interfere with each other in an interference region F as illustrated in the comparative examples of FIGS. 9 and 10. For example, by forming the segment conductor 4 in a manner that the height from the axial end face of the stator core 80 (here, axial first side end face 81) to the vertex of the connecting portion 40 is increased to cause the segment conductor to easily pass under the segment conductor, such interference can be suppressed. However, in this case, the length in the axial direction L of the coil end portion (here, first coil end portion 85) projecting in the axial direction L of the stator core 80 is increased, and thus downsizing of the stator 8 is hindered.

Therefore, in the present embodiment, by devising the shape of the segment conductor 4 (general segment conductor 5), the stator 8 capable of downsizing the coil end portion (first coil end portion 85) while avoiding interference between the segment conductors 4 is obtained.

As described above, the stator 8 of the present embodiment includes the cylindrical stator core 80 having the plurality of slots S arranged side by side in the circumferential direction C, and the three-phase coils 84 wound around the stator core 80 and through which alternating currents of phases different from each other flow. Here, assuming that the phases of an alternating current are a first phase, a second phase, and a third phase (for example, "U-phase, V-phase, and W-phase", "V-phase, W-phase, and U-phase", and "W-phase, U-phase, V-phase") in advancing order of the phases, the coil 84 through which the first-phase alternating current flows is defined as the first-phase coil 1, the coil 84 through which the second-phase alternating current flows is defined as the second-phase coil 2, and the coil 84 through which the third-phase alternating current flows is defined as the third-phase coil 3.

Although details will be described later, as illustrated in FIG. 6, the first-phase coil 1 includes a first housed portion 11 housed in a first slot S1, a second housed portion 12 housed in a second slot S2, which is the slot S adjacent to the first slot S1 on the circumferential second side C2, a third housed portion 13 housed in a third slot S3, which is the slot S disposed to be spaced apart from the second slot S2 on the circumferential second side C2 with a plurality of slots S interposed therebetween, a fourth housed portion 14 housed in a fourth slot S4, which is the slot S adjacent to the third slot S3 on the circumferential second side C2, a first connecting portion 15 that connects the first housed portion 11 and the fourth housed portion 14 on the axial first side L1 of the stator core 80, and a second connecting portion 16 that connects the second housed portion 12 and the third housed portion 13 on the axial first side L1 of the stator core 80. The winding method of the coil 84 is not limited to thereto, but in the example illustrated in FIG. 6, the coil 84 is wound by fractional pitch winding. Here, the third slot S3 is disposed with three slots S interposed between the third slot S3 and the second slot S2. The first connecting portion 15 connects the first housed portion 11 and the fourth housed portion 14 arranged at a pitch of six slots, and the second connecting portion 16 connects the second housed portion 12 and the third housed portion 13 arranged at a pitch of four slots.

The first connecting portion 15 and the second connecting portion 16 are collectively referred to as "first-phase coil connecting portions 10". The first-phase coil 1 includes a first first-phase coil 1a and a second first-phase coil 1b, the first connecting portion 15 is a first-phase coil connecting portion 10 of the first first-phase coil 1a, and the second connecting portion 16 is a first-phase coil connecting portion 10 of the second first-phase coil 1b. The second connecting portion 16 is located to be closer to the axial second side L2 than the first connecting portion 15, and is disposed so as to overlap the first connecting portion 15 in axial view. The present embodiment exemplifies a mode in which the entire second connecting portion 16 overlaps the first connecting portion 15 in axial view. However, only a part of the second connecting portion 16 may overlap the first connecting portion 15 in axial view.

As described above, since the second connecting portion 16 is disposed at the position that is closer to the axial second side L2 than the first connecting portion 15 and overlaps the first connecting portion 15 in axial view, the first connecting portion 15 and the second connecting portion 16 are not aligned in the radial direction R, and the radial dimension of the first coil end portion 85 can be easily reduced.

In addition, the portion of the second-phase coil 2 projecting from the stator core 80 to the axial first side L1 is referred to as "second-phase coil connecting portion 20", and the portion of the third-phase coil 3 projecting from the stator core 80 to the axial first side L1 is referred to as "third-phase coil connecting portion 30". Similarly to the first-phase coil 1, the second-phase coil 2 also includes a first second-phase coil 2a and a second second-phase coil 2b, and the third-phase coil 3 also includes a first third-phase coil 3a and a second third-phase coil 3b. Each of the first second-phase coil 2a and the second second-phase coil 2b includes the second-phase coil connecting portion 20, and each of the first third-phase coil 3a and the second third-phase coil 3b includes the third-phase coil connecting portion 30.

The first connecting portion 15 includes a first circumferential region E1 that is a region on the circumferential first side C1, a second circumferential region E2 that is a region on the circumferential second side C2 of the first circumferential region E1, and a connecting region E3 that is a region connecting the first circumferential region E1 and the second circumferential region E2 and includes the radially bent portion 19 formed to be bent in the radial direction R.

The first circumferential region E1 includes a first section K1 that is on the axial second side L2 of the third-phase coil connecting portion 30 and overlaps the third-phase coil connecting portion 30 in axial view, and a second section K2 that is on the axial first side L1 of the second-phase coil connecting portion 20 and overlaps the second-phase coil connecting portion 20 in axial view. A section (K20) in which the first connecting portion 15 overlaps the second-phase coil connecting portion 20 in axial view on the axial first side L1 of the second-phase coil connecting portion 20 is also present in the connecting region E3. The second section K2 is set as a part of this section (K20).

The second circumferential region E2 includes a third section K3 that is on the axial first side L1 of the third-phase coil connecting portion 30 and overlaps the third-phase coil connecting portion 30 in axial view, and a fourth section K4 that is on the axial second side L2 of the second-phase coil connecting portion 20 and overlaps the second-phase coil connecting portion 20 in axial view. A section (K30) in which the first connecting portion 15 overlaps the third-phase coil connecting portion 30 in axial view on the axial first side L1 of the third-phase coil connecting portion 30 is also present in the connecting region E3. The third section K3 is set as a part of this section (K30).

The first circumferential region E1 is inclined as a whole to the axial first side L1 toward the circumferential second side C2, and the second circumferential region E2 is inclined as a whole to the axial second side L2 toward the circumferential second side C2. Here, the angle formed by the extending direction of the first connecting portion 15 with respect to the circumferential direction C is defined as "extension angle".

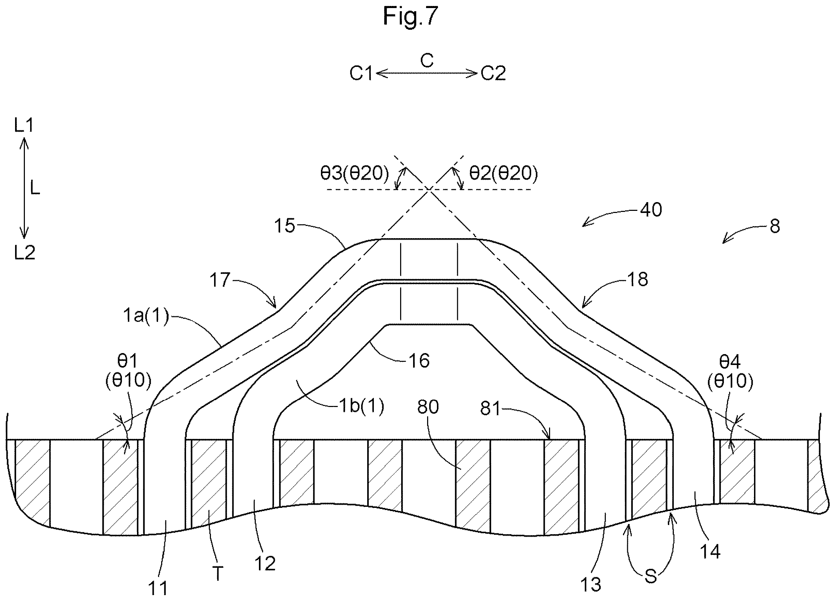

As illustrated in FIG. 6, a first bent portion 17 in which the extension angle of the first connecting portion 15 changes is formed between the first section K1 and the second section K2. The first bent portion 17 is formed by edgewise bending in which the short side of the segment conductor 4 is bent in the axial direction L. The extension angle in the second section K2 is larger than that in the first section K1. That is, as illustrated in FIG. 7, a second extension angle θ2 that is the extension angle of the first connecting portion 15 closer to the circumferential second side C2 than the first bent portion 17 (extension angle in the second section K2) is larger than a first extension angle θ1 that is the extension angle of the first connecting portion 15 closer to the circumferential first side C1 than the first bent portion 17 (extension angle in the first section K1).

As illustrated in FIG. 6, a second bent portion 18 in which the extension angle of the first connecting portion 15 changes is formed between the third section K3 and the fourth section K4. The second bent portion 18 is formed by edgewise bending in which the short side of the segment conductor 4 is bent in the axial direction L. The extension angle in the third section K3 is larger than that in the fourth section K4. That is, as illustrated in FIG. 7, a third extension angle θ3 that is the extension angle of the first connecting portion 15 closer to the circumferential first side C1 than the second bent portion 18 (extension angle in the third section K3) is larger than a fourth extension angle θ4 that is the extension angle of the first connecting portion 15 closer to the circumferential second side C2 than the second bent portion 18 (extension angle in the fourth section K4).

In the present embodiment, the shape of the first connecting portion 15 is symmetrical in radial view, the first extension angle θ1 and the fourth extension angle θ4 are the same angle (θ10), and the second extension angle θ2 and the third extension angle θ3 are the same angle (θ20). That is, an axial first side extension angle θ20, which is the extension angle of the first connecting portion 15 closer to the axial first side L1 than the first bent portion 17 and the second bent portion 18, is larger than an axial second side extension angle θ10, which is the extension angle of the first connecting portion 15 closer to the axial second side L2 than the first bent portion 17 and the second bent portion 18.

The shape of the first connecting portion 15 is not necessarily symmetrical in radial view. That is, the extension angle is only required to satisfy the relationship of "θ2 > θ1" and "θ3> θ4", and the first extension angle θ1 and the fourth extension angle θ4 do not need to be the same angle (axial second side extension angle θ10). Similarly, the second extension angle θ2 and the third extension angle θ3 do not need to be the same angle (axial first side extension angle θ20).

By making the second extension angle θ2, which is the inclination angle (extension angle) of the second section K2, larger than the first extension angle θ1, which is the inclination angle of the first section K1, the position of the first section K1 in the axial direction L is withdrawn to the axial second side L2. As a result, it becomes easy to secure a space between the third-phase coil connecting portion 30 disposed on the axial first side L1 in the first section K1 and the first section K1 (first connecting portion 15), and it becomes easy to avoid the interference between the first section K1 and the third-phase coil connecting portion 30 disposed on the axial first side L1 of the first section K1.

By making the second extension angle θ2, which is the inclination angle (extension angle) of the second section K2, larger than the first extension angle θ1, which is the inclination angle of the first section K1, the position of the second section K2 in the axial direction L is moved to the axial first side L1, so that the second connecting portion 16 disposed closer to the axial second side L2 than the second section K2 can also be moved to the axial first side L1. As a result, it is easy to secure a space between the second-phase coil connecting portion 20 disposed on the axial second side L2 of the second section K2 and the region (section) of the second connecting portion 16 overlapping the second section K2 in axial view, and the second section K2 and the region (section) of the second connecting portion 16 overlapping the second section K2 in axial view. Therefore, it is easy to avoid the interference between the second section K2 and the second-phase coil connecting portion 20 disposed on the axial second side L2 of the second section K2.

By making the third extension angle θ3, which is the inclination angle (extension angle) of the third section K3, larger than the fourth extension angle θ4, which is the inclination angle of the fourth section K4, the position of the third section K3 in the axial direction L is moved to the axial first side L1, so that the second connecting portion 16 disposed closer to the axial second side L2 than the third section K3 can also be moved to the axial first side L1. As a result, it is easy to secure a space between the third-phase coil connecting portion 30 disposed on the axial second side L2 of the third section K3 and the region (section) of the second connecting portion 16 overlapping the third section K3 in axial view, and the third section K3 and the region (section) of the second connecting portion 16 overlapping the third section K3 in axial view. Therefore, it is easy to avoid the interference between the third section K3 and the third-phase coil connecting portion 30 disposed on the axial second side L2 of the third section K3.

By making the third extension angle θ3, which is the inclination angle (extension angle) of the third section K3, larger than the fourth extension angle θ4, which is the inclination angle of the fourth section K4, the position of the fourth section K4 in the axial direction L is withdrawn to the axial second side L2. As a result, it becomes easy to secure a space between the second-phase coil connecting portion 20 disposed on the axial first side L1 of the fourth section K4 and the fourth section K4 (first connecting portion 15), and it becomes easy to avoid the interference between the fourth section K4 and the second-phase coil connecting portion 20 disposed on the axial first side L1 of the fourth section K4.

That is, according to the present embodiment, the first connecting portion 15 and the second connecting portion 16 can be arranged in a limited space in the circumferential direction C while the interference between the first-phase coil 1 and the second-phase coil 2 and the interference between the first-phase coil 1 and the third-phase coil 3 are avoided.

In the comparative example illustrated in FIG. 9, the inclination angle (extension angle) of the connecting portion 40 is constant and does not change. The axial second side extension angle θ10 (first extension angle θ1, fourth extension angle θ4) is smaller than the extension angle (θ9) of the connecting portion 40 in the comparative example illustrated in FIG. 9, and the axial first side extension angle θ20 (second extension angle θ2, third extension angle θ3) is larger than the extension angle (θ9) of the connecting portion 40 in the comparative example. Therefore, in the comparative example, as described above, there is a case where a sufficient space cannot be secured and the connecting portions 40 interfere with each other in the interference region F in both cases where the connecting portion 40 passes over or passes under another connecting portion 40. However, in the present embodiment, as compared with the comparative example, when two segment conductors 4 intersect, it is possible to suppress the length of the connecting portion 40 in the axial direction L while the interference between the segment conductors 4 is avoided.

Furthermore, by reducing the inclination angles of the first section K1 and the fourth section K4, the length in the axial direction L toward the axial first side L1 can be easily kept shorter toward the circumferential second side C2 in the first section K1, and the length in the axial direction L toward the axial first side L1 can be easily kept shorter toward the circumferential first side C1 in the fourth section K4. That is, as a whole, the length of the connecting portion 40 toward the axial first side L1, in other words, the height of the coil 84 in the axial direction L can be kept low. Therefore, the dimension of the first coil end portion 85 in the axial direction L can be easily reduced.

In the above description, the first section K1, the second section K2, the third section K3, the fourth section K4, and the like partially overlap each other in axial view. However, the overlap in the definition of these sections is not limited to partial overlap, and includes a case of full overlap.

As illustrated in FIG. 6 (although the sections are not illustrated, see FIG. 5 in stereoscopic view), the first section K1 is disposed on the radially inner side R1 of the second-phase coil connecting portion 20 so as to overlap the second-phase coil connecting portion 20 in radial view. The second section K2 is disposed on the radially inner side R1 of the third-phase coil connecting portion 30 so as to overlap the third-phase coil connecting portion 30 in radial view. The third section K3 is disposed on the radially outer side R2 of the second-phase coil connecting portion 20 so as to overlap the second-phase coil connecting portion 20 in radial view. The fourth section K4 is disposed on the radially outer side R2 of the third-phase coil connecting portion 30 so as to overlap the third-phase coil connecting portion 30 in radial view. Here, attention is paid to the second-phase coil 2 and the third-phase coil 3 arranged in the same layer (here, two layers adjacent in the radial direction R) as the first-phase coil 1.

As described above, according to the present embodiment, the first connecting portion 15 and the second connecting portion 16 of the first-phase coil 1, the second-phase coil connecting portion 20, and the third-phase coil connecting portion 30 can be appropriately arranged in a limited space. Therefore, the first coil end portion 85 of the stator 8 can be easily downsized.

As illustrated in FIG. 6, the connecting region E3 is disposed along the circumferential direction C as a whole, and the radially bent portion 19 is disposed at a position not overlapping both the second-phase coil connecting portion 20 and the third-phase coil connecting portion 30 in radial view.

With such a configuration, it is easy to reduce the dimension of the first coil end portion 85 in the radial direction R as compared with the case where the radially bent portion 19 is disposed to overlap at least one of the second-phase coil connecting portion 20 or the third-phase coil connecting portion 30 in radial view. In the present embodiment, the radially bent portion 19 formed in the connecting region E3 is formed by bending only in the radial direction R, and the segment conductor 4 is not bent in the axial direction L. That is, since the bent portion can be formed in a manner that the bending directions of the segment conductors 4 are not combined in the connecting region E3 (in a manner that the edgewise bending and the flatwise bending are not combined), the mechanical load on the insulating film applied to the surface of the segment conductor 4 is less likely to increase, and the insulation property is easily ensured.

As described above, the conductor forming the coil 84 is a coated conductor wire with a rectangular cross-section and an insulating film formed on the surface. The rectangular wire is likely to have a higher space factor than the round wire, and the stator 8 is likely to be downsized accordingly. In addition, the coil 84 is easily wound around the stator core 80 at a high space factor while ensuring insulation property by having the insulating film. In addition, since the rectangular wire is easy to maintain the formed shape, for example, the first connecting portion 15 and the second connecting portion 16 of the first-phase coil 1, the second-phase coil connecting portion 20, and the third-phase coil connecting portion 30 are easily formed into a predetermined shape, and are easily aligned in a limited space and appropriately arranged.

As described above, the conductor forming the coil 84 has a rectangular shape in which the dimension (long side length W1) in the axial direction L of the cross-section is larger than the dimension (short side length W2) of the cross-section in the radial direction R in the first connecting portion 15 and the second connecting portion 16. Therefore, the first bent portion 17 and the second bent portion 18 are axially bent portions bent in the axial direction L.

Since the first bent portion 17 and the second bent portion 18 are not bent in the radial direction R, the coil end portion of the stator is suppressed from becoming large in the radial direction. By the first bent portion and the second bent portion being bent in the axial direction, the axial length of the first connecting portion is reduced. Therefore, the coil end portion of the stator can be easily downsized.

In the above description, the coil 84 formed using the segment conductor 4 (general segment conductor 5) and the stator 8 including the coil 84 have been described from the relationship with the second-phase coil 2 and the third-phase coil 3 by using the first-phase coil 1 as a representative. The structures of the first-phase coil 1, the second-phase coil 2, and the third-phase coil 3 are similar to each other, and the mode described above using the first-phase coil 1 as a representative is also applied to the second-phase coil 2 and the third-phase coil 3.

### [Summary of Present Embodiment]

Hereinafter, the stator (8) described above will be briefly summarized.

In view of the above, a stator (8) of a rotating electrical machine includes a stator core (80) with a cylindrical shape, having a plurality of slots (S) arranged side by side in a circumferential direction (C), and three-phase coils (84) wound around the stator core (80) and through which alternating currents of phases different from each other flow, phases of the alternating currents are assumed to be a first phase, a second phase, and a third phase in advancing order of the phases, the coil (84) through which the alternating current of the first phase flows is assumed to be a first-phase coil (1), the coil (84) through which the alternating current of the second phase flows is assumed to be a second-phase coil (2), and the coil (84) through which the alternating current of the third phase flows is assumed to be a third-phase coil (3), a direction along an axial center (X) of the stator core (80) is assumed to be an axial direction (L), a direction orthogonal to the axial center (X) is assumed to be a radial direction (R), one side in the axial direction (L) is assumed to be an axial first side (L1), the other side in the axial direction (L) is assumed to be an axial second side (L2), one side in the circumferential direction (C) is assumed to be a circumferential first side (C1), and the other side in the circumferential direction (C) is assumed to be a circumferential second side (C2), the first-phase coil (1) includes a first housed portion (11) housed in a first slot (S1) as a first slot of the slots (S), a second housed portion (12) housed in a second slot (S2) that is the slot (S) adjacent to the first slot (S1) on the circumferential second side (C2), a third housed portion (13) housed in a third slot (S3) that is the slot (S) disposed to be spaced apart from the second slot (S2) on the circumferential second side (C2) with a plurality of the slots (S) interposed between the third slot and the second slot (S2), a fourth housed portion (14) housed in a fourth slot (S4) that is the slot (S) adjacent to the third slot (S3) on the circumferential second side (C2), a first connecting portion (15) connecting the first housed portion (11) and the fourth housed portion (14) on the axial first side (L1) of the stator core (80), and a second connecting portion (16) connecting the second housed portion (12) and the third housed portion (13) on the axial first side (L1) of the stator core (80), the second connecting portion (16) is located closer to the axial second side (L2) than the first connecting portion (15) and is disposed so as to overlap the first connecting portion (15) in axial view along the axial direction (L), a portion of the second-phase coil (2) projecting from the stator core (80) to the axial first side (L1) is assumed to be a second-phase coil connecting portion (20), and a portion of the third-phase coil (3) projecting from the stator core (80) to the axial first side (L1) is assumed to be a third-phase coil connecting portion (30), the first connecting portion (15) includes a first circumferential region (E1) that is a region on the circumferential first side (C1), a second circumferential region (E2) that is a region on the circumferential second side (C2) of the first circumferential region (E1), and a connecting region (E3) that is a region connecting the first circumferential region (E1) and the second circumferential region (E2) and includes a radially bent portion (19) formed to be bent in the radial direction (R), the first circumferential region (E1) includes a first section (K1) that is on the axial second side (L2) of the third-phase coil connecting portion (30) and overlaps the third-phase coil connecting portion (30) in the axial view, and a second section (K2) that is on the axial first side (L 1) of the second-phase coil connecting portion (20) and overlaps the second-phase coil connecting portion (20) in the axial view, the second circumferential region (E2) includes a third section (K3) that is on the axial first side (L1) of the third-phase coil connecting portion (30) and overlaps the third-phase coil connecting portion (30) in the axial view, and a fourth section (K4) that is on the axial second side (L2) of the second-phase coil connecting portion (20) and overlaps the second-phase coil connecting portion (20) in the axial view, the first circumferential region (E1) is inclined as a whole to the axial first side (L1) toward the circumferential second side (C2), and the second circumferential region (E2) is inclined as a whole to the axial second side (L2) toward the circumferential second side (C2), and an angle formed by an extending direction of the first connecting portion (15) with respect to the circumferential direction (C) is assumed to be an extension angle, a first bent portion (17) in which the extension angle changes is formed between the first section (K1) and the second section (K2), and the extension angle in the second section (K2) is larger than the extension angle in the first section (K1), and a second bent portion (18) in which the extension angle changes is formed between the third section (K3) and the fourth section (K4), and the extension angle in the third section (K3) is larger than the extension angle in the fourth section (K4).

According to this configuration, since the second connecting portion (16) is disposed at the position that is closer to the axial second side (L2) than the first connecting portion (15) and overlaps the first connecting portion (15) in axial view, the first connecting portion (15) and the second connecting portion (16) are not aligned in the radial direction (R), and the radial dimension of the coil end portion can be easily reduced. According to this configuration, since the inclination angle of the second section (K2) is larger than the inclination angle of the first section (K1), the first connecting portion (15) and the second connecting portion (16) can be arranged in a limited space in the circumferential direction (C) while the interference between the first section (K1) and the third-phase coil connecting portion (30) disposed on the axial first side (L1) of the first section (K1), the interference between the second section (K2) and the second-phase coil connecting portion (20) disposed on the axial second side (L2) of the second section (K2), the interference between the third section (K3) and the third-phase coil connecting portion (30) disposed on the axial second side (L2) of the third section (K3), and the interference between the fourth section (K4) and the second-phase coil connecting portion (20) disposed on the axial first side (L1) of the fourth section (K4) are avoided. Since the inclinations of the first section (K1) and the fourth section (K4) are reduced, the length in the axial direction (L) toward the axial first side (L1) can be easily kept shorter toward the circumferential second side (C2) in the first section (K1), and the length in the axial direction (L) toward the axial first side (L1) can be easily kept shorter toward the circumferential first side (C1) in the fourth section (K4). That is, as a whole, the length of the connecting portion (40) toward the axial first side (L1), in other words, the height of the coil (84) in the axial direction (L) can be kept low. Therefore, the axial dimension of the coil end portion can be easily reduced. As described above, according to this configuration, it is possible to obtain the stator (8) capable of downsizing the coil end portion while avoiding the interference between the segment conductors (4).

Preferably, the first section (K1) is disposed on the inner side (R1) in the radial direction (R) of the second-phase coil connecting portion (20) so as to overlap the second-phase coil connecting portion (20) in radial view along the radial direction (R), the second section (K2) is disposed on the inner side (R1) in the radial direction (R) of the third-phase coil connecting portion (30) so as to overlap the third-phase coil connecting portion (30) in the radial view, the third section (K3) is disposed on the outer side (R2) in the radial direction (R) of the second-phase coil connecting portion (20) so as to overlap the second-phase coil connecting portion (20) in the radial view, and the fourth section (K4) is on the outer side (R2) in the radial direction (R) of the third-phase coil connecting portion (30) so as to overlap the third-phase coil connecting portion (30) in the radial view.

According to this configuration, the first connecting portion (15) and the second connecting portion (16) of the first-phase coil (1), the second-phase coil connecting portion (20), and the third-phase coil connecting portion (30) can be appropriately arranged in a limited space. Therefore, the first coil end portion (85) of the stator (8) can be easily downsized.

Here, it is preferable that the connecting region (E3) be disposed along the circumferential direction (C) as a whole, and the radially bent portion (19) be disposed at the position not overlapping both the second-phase coil connecting portion (20) and the third-phase coil connecting portion (30) in the radial view.

According to this configuration, it is easy to reduce the dimension of the first coil end portion (85) in the radial direction (R) as compared with the case where the radially bent portion (19) is disposed to overlap at least one of the second-phase coil connecting portion (20) or the third-phase coil connecting portion (30) in radial view. In addition, the radially bent portion (19) formed in the connecting region (E3) is formed by bending only in the radial direction (R), and the segment conductor (4) is not bent in the axial direction (L). That is, since the bent portion can be formed in a manner that the bending directions of the segment conductors (4) are not combined in the connecting region (E3) (in a manner that the edgewise bending and the flatwise bending are not combined), the mechanical load on the insulating film applied to the surface of the segment conductor (4) is less likely to increase, and the insulation property is easily ensured.

In the stator (8), the conductor forming the coil (84) is preferably a coated conductor wire with a rectangular cross-section and an insulating film formed on the surface.

The rectangular wire is likely to have a higher space factor than the round wire, and the stator (8) is easily downsized accordingly. In addition, the coil (84) is easily wound around the stator core (80) at a high space factor while ensuring insulation property by having the insulating film. In addition, since the rectangular wire is easy to maintain the formed shape, for example, the first connecting portion (15) and the second connecting portion (16) of the first-phase coil 1, the second-phase coil connecting portion (20), and the third-phase coil connecting portion (30) are easily formed into a predetermined shape, and are easily aligned in a limited space and appropriately arranged.

In the stator (8), preferably, the conductor has a rectangular shape in which the dimension (W1) in the axial direction (L) of a cross-section is larger than the dimension (W2) in the radial direction (R) of the cross-section in the first connecting portion (15) and the second connecting portion (16), and the first bent portion (17) and the second bent portion (18) are axially bent portions bent in the axial direction (L).

Since the first bent portion (17) and the second bent portion (18) are not bent in the radial direction (R), the coil end portion of the stator (8) is suppressed from becoming large in the radial direction (R). By the first bent portion (17) and the second bent portion (18) being bent in the axial direction (L), the axial length of the first connecting portion (15) is reduced. Therefore, the coil end portion of the stator (8) can be easily downsized.

### REFERENCE SIGNS LIST

1: First-phase coil, 2: Second-phase coil, 3: Third-phase coil, 8: Stator, 11: First housed portion, 12: Second housed portion, 13: Third housed portion, 14: Fourth housed portion, 15: First connecting portion, 16: Second connecting portion, 17: First bent portion, 18: Second bent portion, 19: Radially bent portion, 20: Second-phase coil connecting portion, 30: Third-phase coil connecting portion, 40: Connecting portion, 49: Bent portion, 80: Stator core, 84: Coil, C: Circumferential direction, C1: Circumferential first side, C2: Circumferential second side, E1: First circumferential region, E2: Second circumferential region, E3: Connecting region, K1: First section, K2: Second section, K3: Third section, K4: Fourth section, L: Axial direction, L1: Axial first side, L2: Axial second side, R: Radial direction, R1: Radially inner side (Inner side in radial direction), R2: Radially outer side (Outer side in radial direction), S: Slot, S1: First slot, S2: Second slot, S3: Third slot, S4: Fourth slot, X: Axial center, θ1: First extension angle (Extension angle in first section), θ2: Second extension angle (Extension angle in second section), θ3: Third extension angle (Extension angle in third section), and θ4: Fourth extension angle (Extension angle in fourth section).

## Claims

1. A stator (8) of a rotating electrical machine comprising: a stator core (80) with a cylindrical shape, having a plurality of slots (S) arranged side by side in a circumferential direction (C); and three-phase coils (84) wound around the stator core (80) and through which alternating currents of phases different from each other flow, wherein
phases of the alternating currents are assumed to be a first phase, a second phase, and a third phase in advancing order of the phases, the coil (84) through which the alternating current of the first phase (U) flows is assumed to be a first-phase coil (1), the coil through which the alternating current of the second phase (V) flows is assumed to be a second-phase coil (2), and the coil through which the alternating current of the third phase (W) flows is assumed to be a third-phase coil (3),
a direction along an axial center of the stator core (80) is assumed to be an axial direction (L), a direction orthogonal to the axial center is assumed to be a radial direction (R), of one side in the axial direction is assumed to be an axial first side (L1), another side in the axial direction is assumed to be an axial second side (L2), one side in the circumferential direction is assumed to be a circumferential first side (C1), and
another side in the circumferential direction is assumed to be a circumferential second side (C2), the first-phase coil (1) includes a first housed portion (11) housed in a first slot (S1) as a first slot of the slots, a second housed portion (12) housed in a second slot (S2) that is the slot adjacent to the first slot (S1) on the circumferential second side (C2),
a third housed portion (13) housed in a third slot (S3) that is the slot disposed to be spaced apart from the second slot (S2) on the circumferential second side (C2) with a plurality of the slots interposed between the third slot (S3) and the second slot (S2), a fourth housed portion (14) housed in a fourth slot (S4) that is the slot adjacent to the third slot (S3) on the circumferential second side, a first connecting portion (15) connecting the first housed portion (11) and the fourth housed portion (14) on the axial first side (L1) of the stator core, and a second connecting portion (16) connecting the second housed portion (12) and the third housed (13) on the axial first side of the stator core, the second connecting portion (16) is located closer to the axial second side than the first connecting portion (15) and is disposed so as to overlap the first connecting portion (15) in axial view along the axial direction,
a portion of the second-phase coil (2) projecting from the stator core (80) to the axial first side (L1) is assumed to be a second-phase coil connecting portion (20), and a portion of the third-phase coil (3) projecting from the stator core to the axial first side is assumed to be a third-phase coil connecting portion (30),
the first connecting portion (15) includes a first circumferential region (E1) that is a region on the circumferential first side (C1), a second circumferential region (E2) that is a region on the circumferential second side (C2) of the first circumferential region (E1), and a connecting region (E3) that is a region connecting the first circumferential region (E1) and the second circumferential region (E2) and includes a radially bent portion (19) formed to be bent in the radial direction (R), **characterized in that** the first circumferential region (E1) includes a first section (K1) that is on the axial second side (L2) of the third-phase coil connecting portion (30) and overlaps the third-phase coil connecting portion (30) in the axial view, and a second section (K2) that is on the axial first side (L1) of the second-phase coil connecting portion (20) and overlaps the second-phase coil connecting portion (20) in the axial view,
the second circumferential region (E2) includes a third section (K3) that is on the axial first side (L1) of the third-phase coil connecting portion (30) and overlaps the third-phase coil connecting portion (30) in the axial view, and a fourth section (K4) that is on the axial second side (L2) of the second-phase coil connecting portion (20) and overlaps the second-phase coil connecting portion (20) in the axial view,
the first circumferential region (E1) is inclined as a whole to the axial first side (L1) toward the circumferential second side (C2), of and the second circumferential region (E2) is inclined as a whole to the axial second side (L2) toward the circumferential second side (C2), and
an angle formed by an extending direction of the first connecting portion (15) with respect to the circumferential direction is assumed to be an extension angle,
a first bent portion (17) in which the extension angle changes is formed between the first section (K1) and the second section (K2), and the extension angle in the second section (K2) is larger than the extension angle in the first section (K1), and
a second bent portion (18) in which the extension angle changes is formed between the third section (K3) and the fourth section (K4), and the extension angle in the third section (K3) is larger than the extension angle in the fourth section (K4).

2. The stator according to claim 1, wherein
the first section (K1) is disposed on an inner side (R1) in the radial direction of the second-phase coil connecting portion (20) so as to overlap the second-phase coil connecting portion in radial view along the radial direction,
the second section (K2) is disposed on the inner side in the radial direction of the third-phase coil connecting portion (30) so as to overlap the third-phase coil connecting portion (30) in the radial view,
the third section (K3) is disposed on an outer side in the radial direction of the second-phase coil connecting portion (20) so as to overlap the second-phase coil connecting portion (20) in the radial view, and
the fourth section (K4) is on the outer side in the radial direction of the third-phase coil connecting portion (30) so as to overlap the third-phase coil connecting portion (30) in the radial view.

3. The stator according to claim 2, wherein
the connecting region (E3) is disposed along the circumferential direction (C) as a whole, and
the radially bent portion (19) is disposed at a position not overlapping both the second-phase coil connecting portion (20) and the third-phase coil connecting portion (30) in the radial view.

4. The stator according to any one of claims 1 to 3, wherein a conductor (4) forming the coil (84) is a coated conductor wire with a rectangular cross-section and an insulating film formed on a surface.

5. The stator according to claim 4, wherein
the conductor (4) has a rectangular shape in which a dimension in the axial direction of a cross-section is larger than the dimension in the radial direction of the cross-section in the first connecting portion (15) and the second connecting portion (16), and
the first bent portion (17) and the second bent portion (18) are axially bent portions bent in the axial direction.

## Patentansprüche

1. Stator (8) einer drehenden elektrischen Maschine mit: einem Statorkern (80) mit einer zylindrischen Form, mit mehreren Schlitzen (S), die nebeneinander in einer Umfangsrichtung (C) angeordnet sind; und Dreiphasenwicklungen (84), die um den Statorkern (80) gewickelt sind und durch die alternierende Ströme von Phasen, die unterschiedlich zueinander sind, fließen, bei dem
Phasen der alternierenden Ströme als eine erste Phase, eine zweite Phase und eine dritte Phase in aufsteigender Ordnung der Phasen angenommen werden, die Wicklung (84), durch die der alternierende Strom der ersten Phase (U) fließt, als eine erste Phasenwicklung (1) angenommen wird, die Wicklung, durch die der alternierende Strom der zweiten Phase (V) fließt, als eine zweite Phasenwicklung (2) angenommen wird, und die Wicklung, durch die der alternierende Strom der dritten Phase (W) fließt, als eine dritte Phasenwicklung (3) angenommen wird, eine Richtung entlang eines axialen Zentrums des Statorkerns (80) als eine axiale Richtung (L) angenommen wird, eine Richtung orthogonal zu dem axialen Zentrum als eine radiale Richtung (R) angenommen wird, eine Seite in der axialen Richtung als eine axial erste Seite (L1) angenommen wird, eine andere Seite in der axialen Richtung als eine axiale zweite Seite (L2) angenommen wird, eine Seite in der Umfangsrichtung als eine umfangmäßig erste Seite (C1) und eine andere Seite in der Umfangsrichtung als eine umfangsmäßig zweite Seite (C2) angenommen wird,
die erste Phasenwicklung (1) einen ersten aufgenommenen Teil (11), der in einem ersten Schlitz (S1) als ein erster Schlitz der Schlitze aufgenommen ist, einen zweiten aufgenommenen Teil (12), der in einem zweiten Schlitz (S2), der der Schlitz benachbart zu dem ersten Schlitz (S1) auf der umfangmäßig zweiten Seite (C2) ist aufgenommen ist, einen dritten aufgenommenen Teil (13), der in einem dritten Schlitz (S3), der der Schlitz der beabstandet von dem zweiten Schlitz (S2) auf der umfangmäßig zweiten Seite (C2) mit mehreren der Schlitzen, die zwischen dem dritten Schlitz (S3) und dem zweiten Schlitz (S2) vorgesehen sind, ist, aufgenommen ist, einen vierten aufgenommenen Teil (14), der in einem vierten Schlitz (S4), der ein Schlitz ist, der benachbart zu dem dritten Schlitz (S3) auf der umfangmäßig zweiten Seite ist, aufgenommen ist, einen ersten Verbindungsteil (15), der den ersten aufgenommenen Teil (11) und den vierten aufgenommenen Teil (14) auf der ersten axialen Seite (L1) des Statorkerns verbindet, und einen zweiten Verbindungsteil (16), der den zweiten aufgenommenen Teil (12) und den dritten aufgenommenen Teil (13) auf der axialen ersten Seite des Statorkerns verbindet,
der zweite Verbindungsteil (16) sich näher an der axialen zweiten Seite als der erste Verbindungsteil (15) befindet und so angeordnet ist, dass er den ersten Verbindungsteil (15) in axialer Ansicht entlang der axialen Richtung überlappt,
ein Teil der zweiten Phasenwicklung (2), der von dem Statorkern (80) zu der axialen ersten Seite (L1) vorsteht, als ein zweiter Phasenwicklungsverbindungsteil (20) angesehen wird, und ein Teil der dritten Phasenwicklung (3), der von dem Statorkern zu der axialen ersten Seite vorsteht, als ein dritter Phasenwicklungsverbindungsteil (30) angesehen wird,
der erste Verbindungsteil (15), der eine ersten Umfangsregion (E1), die eine Region auf der umfangsmäßig ersten Seite (C1) ist, eine zweite Umfangsregion (E2), die eine Region auf der umfangsmäßig zweiten Seite (C2) der ersten Umfangsregion (E1) ist, und eine Verbindungsregion (E3), die eine Region, die die erste Umfangsregion (E1) und die zweite Umfangsregion (E2) verbindet und einen radial gebogenen Teil (19), der in der radialen Richtung (R) gebogen ist, aufweist, **dadurch gekennzeichnet, dass**
die erste Umfangsregion (E1) einen ersten Abschnitt (K1), der auf der axialen zweiten Seite (L2) des dritten Phasenwicklungsverbindungsteil (30) ist und den dritten Phasenwicklungsverbindungsteil (30) in der axialen Ansicht überlappt, und einen zweiten Abschnitt (K2), der auf der axialen ersten Seite (L1) des zweiten Phasenwicklungsverbindungsteil (20) ist und den zweiten Phasenwicklungsverbindungsteil (20) in der axialen Ansicht überlappt, aufweist,
die zweite Umfangsregion (E2) einen dritten Abschnitt (K3), der auf der axialen ersten Seite (L1) des dritten Phasenverbindungsteils (30) vorhanden ist und das dritte Phasenwicklungsverbindungsteil (30) in der axialen Ansicht überlappt, und einen vierten Abschnitt (K4), der auf der axialen zweiten Seite (L2) des zweiten Phasenverbindungsteils (20) vorhanden ist und die zweite Phasenwicklungsverbindungsteil (20) in der axialen Ansicht überlappt, aufweist,
die erste Umfangsregion (E1) als Ganzes zu der axialen ersten Seite (L1) in Richtung der zweiten Umfangsseite (C2) geneigt ist und die zweite Umfangsregion (E2) als Ganzes zu der axialen zweiten Seite (L2) zu der umfangmäßig zweiten Seite (C2) geneigt ist, und
ein Winkel, der durch eine Erstreckungsrichtung des ersten Verbindungsteils (15) in Bezug auf den in Umfangsrichtung ausgebildet wird, als ein Verlängerungswinkel angenommen wird,
ein erster gebogener Teil (17), in dem der Verlängerungswinkel sich ändert, zwischen dem ersten Abschnitt (K1) und dem zweiten Abschnitt (K2) ausgebildet ist, und der Verlängerungswinkel in dem zweiten Abschnitt (K2) größer ist als der Verlängerungswinkel in dem ersten Abschnitt (K1) ist, und
ein zweiter gebogener Teil (18), in dem der Verlängerungswinkel sich ändert, zwischen dem dritten Abschnitt (K3) und dem vierten Abschnitt (K4) ausgebildet ist, und der Verlängerungswinkel in dem dritten Abschnitt (K3) größer ist als der Verlängerungswinkel in dem vierten Abschnitt (K4) ist.

2. Stator nach Anspruch 1, bei dem
der erste Abschnitt (K1) auf einer Innenseite (R1) in der radialen Richtung des zweiten Phasenwicklungsverbindungsteils (20) angeordnet ist, so dass er den zweiten Phasenwicklungsverbindungsteil in einer radialen Ansicht entlang der radialen Richtung überlappt,
der zweite Abschnitt (K2) auf der Innenseite in der radialen Richtung des dritten Phasenwicklungsverbindungsteils (30) angeordnet ist, so dass er den dritten Phasenwicklungsverbindungsteil (30) in der radialen Ansicht überlappt,
der dritte Abschnitt (K3) auf einer Außenseite in der radialen Richtung des zweiten Phasenwicklungsverbindungsteils (20) angeordnet ist, so dass er den zweiten Phasenwicklungsverbindungsteil (20) in der radialen Ansicht überlappt, und
der vierte Abschnitt (K4) ist auf der Außenseite in der radialen Richtung des dritten Phasenwicklungsverbindungsteils (30) angeordnet ist, so dass er den dritten Phasenwicklungsverbindungsteil (30) in der radialen Ansicht überlappt.

3. Stator nach Anspruch 2, bei dem
die Verbindungsregion (E3) entlang der Umfangsrichtung (C) als Ganzes angeordnet ist und
der radial gebogene Teil (19) an einer Position, die in der radialen Ansicht weder den zweiten Phasenwicklungsverbindungsteil (20) noch den dritten Phasenwicklungsverbindungsteil (30) überlappt, angeordnet ist.

4. Stator nach einem der Ansprüche 1 bis 3, bei dem ein Leiter (4), der die Wicklung (84) ausbildet, ein beschichteter Leitungsdraht mit einem rechtwinkligen Querschnitt und einem isolierenden Film, der auf einer Oberfläche ausgebildet ist, ist.

5. Stator nach Anspruch 4, bei dem
der Leiter (4) eine rechtwinklige Form aufweist, bei der eine Abmessung in der axialen Richtung eines Querschnitts größer ist als die Abmessung in der radialen Richtung des Querschnitts in dem ersten Verbindungsteil (15) und dem zweiten Verbindungsteil (16), und
der erste gebogene Teil (17) und der zweite gebogene Teil (18) axial gebogene Teile sind, die in der axialen Richtung gebogen sind.

## Revendications

1. Stator (8) d'une machine électrique tournante comprenant : un noyau de stator (80) de forme cylindrique, ayant une pluralité de fentes (S) disposées côte à côte dans une direction circonférentielle (C) ; et des bobines triphasées (84) enroulées autour du noyau de stator (80) et à travers lesquelles circulent des courants alternatifs de phases différentes les unes des autres, dans lequel
les phases des courants alternatifs sont supposées être une première phase, une deuxième phase et une troisième phase dans l'ordre croissant des phases, la bobine (84) à travers laquelle circule le courant alternatif de la première phase (U) est supposée être une bobine à première phase (1), la bobine à travers laquelle circule le courant alternatif de la deuxième phase (V) est supposée être une bobine à deuxième phase (2), et la bobine à travers laquelle circule le courant alternatif de la troisième phase (W) est supposée être une bobine triphasée (3), une direction le long d'un centre axial du noyau de stator (80) est supposée être une direction axiale (L), une direction orthogonale au centre axial est supposée être une direction radiale (R), un côté dans la direction axiale est supposé être un premier côté axial (L1), un autre côté dans la direction axiale est supposé être un deuxième côté axial (L2), un côté dans la direction circonférentielle est supposé être un premier côté circonférentiel (C1), et un autre côté dans la direction circonférentielle est supposé être un deuxième côté circonférentiel (C2), la bobine à première phase (1) comprend une première partie logée (11) logée dans une première fente (S1) en tant que première fente des fentes, une deuxième partie logée (12) logée dans une deuxième fente (S2) qui est la fente adjacente à la première fente (S1) sur le deuxième côté circonférentiel (C2), une troisième partie logée (13) logée dans une troisième fente (S3) qui est la fente disposée de manière à être espacée de la deuxième fente (S2) sur le deuxième côté circonférentiel (C2) avec une pluralité de fentes interposées entre la troisième fente (S3) et la deuxième fente (S2), une quatrième partie logée (14) logée dans une quatrième fente (S4) qui est la fente adjacente à la troisième fente (S3) sur le deuxième côté circonférentiel, une première partie de connexion (15) reliant la première partie logée (11) et la quatrième partie logée (14) sur le premier côté axial (L1) du noyau de stator, et une deuxième partie de connexion (16) reliant la deuxième partie logée (12) et la troisième partie logée (13) sur le premier côté axial du noyau de stator, la deuxième partie de connexion (16) est située plus près du deuxième côté axial que la première partie de connexion (15) et est disposée de manière à chevaucher la première partie de connexion (15) dans une vue axiale le long de la direction axiale,
une partie de la bobine à deuxième phase (2) faisant saillie depuis le noyau de stator (80) vers le premier côté axial (L1) est supposée être une partie de connexion de bobine à deuxième phase (20), et une partie de la bobine triphasée (3) faisant saillie depuis le noyau de stator vers le premier côté axial est supposée être une partie de connexion de bobine triphasée (30),
la première partie de connexion (15) comprend une première région circonférentielle (E1) qui est une région sur le premier côté circonférentiel (C1), une deuxième région circonférentielle (E2) qui est une région sur le deuxième côté circonférentiel (C2) de la première région circonférentielle (E1), et une région de connexion (E3) qui est une région reliant la première région circonférentielle (E1) et la deuxième région circonférentielle (E2) et comprend une partie incurvée radialement (19) formée pour être incurvée dans la direction radiale (R), **caractérisé en ce que** la première région circonférentielle (E1) comprend une première section (K1) qui se trouve sur le deuxième côté axial (L2) de la partie de connexion de bobine triphasée (30) et recouvre la partie de connexion de bobine triphasée (30) dans la vue axiale, et une deuxième section (K2) qui se trouve sur le premier côté axial (L1) de la partie de connexion de bobine à deuxième phase (20) et recouvre la partie de connexion de bobine à deuxième phase (20) dans la vue axiale, la deuxième région circonférentielle (E2) comprend une troisième section (K3) qui se trouve sur le premier côté axial (L1) de la partie de connexion de bobine triphasée (30) et recouvre la partie de connexion de bobine triphasée (30) dans la vue axiale, et une quatrième section (K4) qui se trouve sur le deuxième côté axial (L2) de la partie de connexion de bobine à deuxième phase (20) et recouvre la partie de connexion de bobine de deuxième phase (20) dans la vue axiale, la première région circonférentielle (E1) est inclinée dans son ensemble vers le premier côté axial (L1) en direction du deuxième côté circonférentiel (C2), et la deuxième région circonférentielle (E2) est inclinée dans son ensemble vers le deuxième côté axial (L2) vers le deuxième côté circonférentiel (C2), et un angle formé par une direction d'extension de la première partie de connexion (15) par rapport à la direction circonférentielle est supposé être un angle d'extension, une première partie incurvée (17) dans laquelle l'angle d'extension change est formée entre la première section (K1) et la deuxième section (K2), et l'angle d'extension dans la deuxième section (K2) est plus grand que l'angle d'extension dans la première section (K1), et une deuxième partie incurvée (18) dans laquelle l'angle d'extension change est formée entre la troisième section (K3) et la quatrième section (K4), et l'angle d'extension dans la troisième section (K3) est plus grand que l'angle d'extension dans la quatrième section (K4).

2. Stator selon la revendication 1, dans lequel
la première section (K1) est disposée sur un côté intérieur (R1) dans la direction radiale de la partie de connexion de bobine à deuxième phase (20) de manière à chevaucher la partie de connexion de bobine à deuxième phase en vue radiale le long de la direction radiale, la deuxième section (K2) est disposée sur le côté intérieur dans la direction radiale de la partie de connexion de bobine triphasée (30) de manière à recouvrir la partie de connexion de bobine triphasée (30) en vue radiale, la troisième section (K3) est disposée sur un côté extérieur dans la direction radiale de la partie de connexion de bobine à deuxième phase (20) de manière à recouvrir la partie de connexion de bobine à deuxième phase (20) en vue radiale, et la quatrième section (K4) est disposée sur le côté extérieur dans la direction radiale de la partie de connexion de bobine triphasée (30) de manière à recouvrir la partie de connexion de bobine triphasée (30) dans la vue radiale.

3. Stator selon la revendication 2, dans lequel
la région de connexion (E3) est disposée le long de la direction circonférentielle (C) dans son ensemble, et
la partie incurvée radialement (19) est disposée à une position qui ne chevauche ni la partie de connexion de bobine à deuxième phase (20) ni la partie de connexion de bobine triphasée (30) dans la vue radiale.

4. Stator selon l'une quelconque des revendications 1 à 3, dans lequel un conducteur (4) formant la bobine (84) est un fil conducteur revêtu ayant une section transversale rectangulaire et un film isolant formé sur une surface.

5. Stator selon la revendication 4, dans lequel
le conducteur (4) a une forme rectangulaire dans laquelle une dimension dans la direction axiale d'une section transversale est plus grande que la dimension dans la direction radiale de la section transversale dans la première partie de connexion (15) et la deuxième partie de connexion (16), et la première partie incurvée (17) et la deuxième partie incurvée (18) sont des parties incurvées axialement dans la direction axiale.
